# EUROPÄISCHE PATENTANMELDUNG

(11) **EP 0 723 742 A1**
(43) Veröffentlichungstag der Anmeldung: **31.07.1996**
(21) Anmeldenummer: 95115220.6
(22) Anmeldetag: 27.09.1995
(51) Int. Cl.: A21C 13/00

(54) **Transportvorrichtung für Teiglinge**

(30) Priorität: 28.09.1994 DE 4434592
(71) Anmelder: Werner, Hartmuth, D-66955 Pirmasens (DE)
(72) Erfinder: Werner, Hartmuth, D-66955 Pirmasens (DE)
(74) Vertreter: Schmid, Rudolf, Dipl.-Ing. Patentanwalt

(57) **Zusammenfassung**

Die Erfindung betrifft eine Transportvorrichtung für Teiglinge mit einem Behälter (1), der einen im wesentlichen ebenen Boden (2) und Abstandshalter (3) am äußeren Umfang aufweist. Eine Schaumfolie mit glatter Oberfläche, liegt im wesentlichen auf dem gesamten Boden (2) auf.

## Beschreibung

Die Erfindung betrifft Transportvorrichtungen für Teiglinge gemäß Anspruch 1.

Teiglinge ist eine Bezeichnung für ein Zwischenprodukt bei der Herstellung von Backwaren und bezeichnet die aus Teig geformten Backwaren bevor diese im Backofen auf die zum Verzehr bestimmte Form gebracht werden.

Herkömmliche Transportvorrichtungen für Teiglinge bestehen aus kastenförmigen Behältern mit Boden und Abstandshaltern in Form von umlaufenden Seitenwänden. Die Behälter können übereinander gestapelt werden. Bevor die Teiglinge in diesen herkömmlichen Transportvorrichtungen transportiert werden können, werden Unterlagen aus Gaze oder Tuch in die kastenförmigen Behälter gelegt und die Teiglinge dann auf die Unterlagen gesetzt. Nach dem Transport vom Hersteller der Teiglinge zu den verarbeitenden Bäckereibetrieben werden die Teiglinge aus den herkömmlichen Transportvorrichtungen gekippt oder genommen und die Transportvorrichtungen zur Wiederverwendung zum Hersteller zurückbefördert. Nachteilig bei diesen herkömmlichen Transportvorrichtungen ist der hohe Beschaffungspreis der Unterlagen aus Gaze oder Tuch. In die Unterlagen aus Gaze oder Tuch dringen Teile der Teiglinge ein, die dort nach der Entnahme der Teiglinge verbleiben und es erforderlich machen, daß die Unterlagen aus Gaze oder Tuch in kurzen zeitlichen Abständen regelmäßig gereinigt werden müßen, um Schimmel- und Sporenbildung durch Gär- und Säuerungsprozesse in den Unterlagen aus Gaze oder Tuch entgegen zu wirken. Reinigen der Unterlagen ist zeitaufwendig, da die Unterlagen aus den Behältern gelöst werden müssen.

Ein weiterer Nachteil der Unterlagen aus Gaze oder Tuch ist es, daß für den Transport der Teiglinge Mehl auf die Unterlagen aus Gaze oder Tuch regelmäßig von Hand aufwendig und schwer zu dosieren aufgebracht werden muß.

Aufgabe der Erfindung ist es, eine Transportvorrichtung für Teiglinge zu schaffen, die kostengünstig und bei geringem Wartungsaufwand hygienisch ist.

Die Lösung erfolgt mit einer Transportvorrichtung für Teiglinge mit den Merkmalen des Anspruchs 1. Vorteilhafte Ausgestaltungen der Erfindung sind in den Unteransprüchen dargestellt.

Gemäß der Erfindung ist eine Transportvorrichtung für Teiglinge mit einer Schaumfolie mit glatter Oberfläche versehen, die am Boden eines Behälters aufliegt. Die Schaumfolie ist im Beschaffungspreis sehr viel günstiger als zum gleichen Zweck verwendete herkömmliche Unterlagen aus Gaze oder Tuch. Die Teiglinge haften zwar an der Schaumfolie an, so daß diese an einem einmal zugewiesenen Ort auf der Schaumfolie liegenbleiben, ohne aber in die Schaumfolie einzudringen, so daß nach Entladen keine Teile des Teiglings an der Schaumfolie zurückbleiben. Die Schaumfolie ist nach dem Entladen der Teiglinge aus dem Behälter hygienisch sauber, so daß keine Schimmel- oder Sporenbildung an der Schaumfolie stattfindet. Reinigen der Schaumfolie kann daher entfallen oder ist in sehr viel geringerem Umfang erforderlich als bei herkömmlichen Unterlagen. Die nach dem Stand der Technik erforderliche Zugabe von Mehl per Hand auf die Unterlagen aus Gaze oder Tuch führt je nach lokaler Menge des Mehls zu vollkommenen unterschiedlichen Auflageverhältnissen für die Teiglinge, wohingegen die homogene, glatte Oberfläche der erfindungsgemäßen Schaumfolie, auf die zum Transport der Teiglinge nichts aufgebracht zu werden braucht, ortsunabhängig, identische Auflageverhältnisse für die Teiglinge gewährleistet. Die Steifigkeit der Schaumfolie wirkt Rutschen und/oder Knittern entgegen, so daß die Schaumfolie bei Beschleunigungen während des Transports, wie z.B. bei heftigem Bremsen des Transportsfahrzeugs, ein Zusammenschieben der Teiglinge gegen den in Fahrtrichtung vorderen Abstandshalter des Behälters verhindert oder entgegenwirkt.

Vorzugsweise sind die Behälter der erfindungsgemäßen Transportvorrichtung für Teiglinge rechteckig und die Abstandshalter senkrecht zum Boden des Behälters.

Gemäß bevorzugter Ausgestaltungen der Erfindung sind die Abstandshalter aus rechteckigen Seitenwänden, die mit Griffen versehen sein können, gebildet.

Der Boden der erfindungsgemäßen Transportvorrichtung für Teiglinge ist gemäß einer bevorzugten Ausgestaltung zur Belüftung der Kontaktstellen zwischen Schaumfolie und Boden mit Löchern versehen und mit den Abstandshaltern lösbar verbunden.

Gemäß der Erfindung ist die Schaumfolie der Transportvorrichtung für Teiglinge aus hochwertigem, reinem Polyäthylen gefertigt. Die Schaumfolie kann vorzugsweise lösbar an dem Behälter befestigt sein und weist eine Stärke von 0,5-3,0 mm, insbesondere eine Stärke von 1,5-2,0 mm, auf. Die erfindungsgemäßen Polyäthylen-Schaumfolien werden FCKW-frei produziert, sind chemisch neutral, physiologisch unbedenklich, hautfreundlich, geruchlos, wasserdicht, feuchtigkeitsabweisend, recyclefähig, Öl- und Säureresistent. Bis ca. 80° C treten keine Strukturveränderungen in Polyäthylen-Schaumfolien ein. Beim Verbrennen der Polyäthylen-Schaumfolien treten keine giftigen Ausscheidungen (Gase) auf. Die vorzugsweise verwendeten Cell-Aire Polyäthylen-Schaumfolien weisen ein Raumgewicht von ca. 28 kg bei 0,8 mm auf, haben ihren Brennpunkt bei ca. 380° C und ihren Zündpunkt bei ca. 430° C.

Die Erfindung ist im folgenden anhand eines Ausführungsbeispiels dargestellt. Es zeigt:

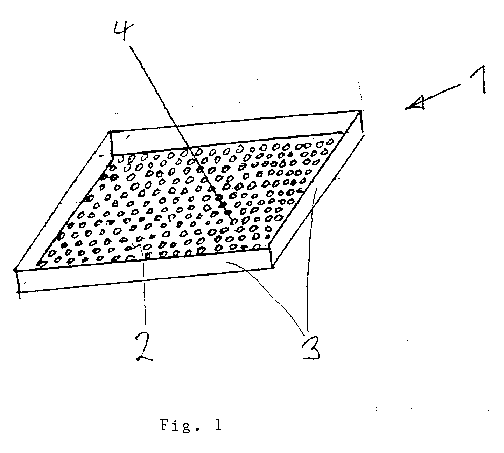

- Fig. 1: eine Ansicht der Transportvorrichtung für Teiglinge.

Fig. 1: Ein rechteckiger Behälter 1, ein sogenannter Sturzkasten, weist einen rechteckigen Boden 2 mit Seitenlängen von ca. 40 cm bzw. 60 cm oder 60 cm bzw. 100 cm oder größer auf. Der Boden 2 ist von Abstandshaltern 3 umgeben, die aus rechteckigen Flächen mit einer Höhe von ca. 4,5 cm und einer Länge gleich der anliegenden Rechtecksseite gebildet sind. Die Abstandshalter 3 können mit Griffen (nicht dargestellt) versehen sein. Luftdurchlässe (nicht dargestellt) sind in den Abstandshaltern 3 parallel zur Ebene des Bodens 2 vorgesehen.

Senkrecht zur Ebene des Bodens 2 sind Löcher 4 im Boden 2 eingebracht. Der Boden 2 kann lösbar mittels Klemm- Schnapp- oder Klettverschlüssen (nicht dargestellt) mit den Abstandshaltern 3 verbunden sein.

Auf dem Boden 2 und zwischen den Abstandshaltern 3 liegt eine Schaumfolie (nicht dargestellt) auf. Die Schaumfolie kann lösbar mittels Klemm- Schnapp- oder Klettverschlüssen (nicht dargestellt) mit den Abstandshaltern 3 und/oder mit dem Boden 2 des Behälters 1 verbunden sein. Die Schaumfolie der Transportvorrichtung für Teiglinge ist aus hochwertigem, reinem Polyäthylen gefertigt und weist eine glatte Oberfläche auf. Die Schaumfolie ist lösbar am Behälter 1 befestigt und weist eine Stärke von 0,5-3,0 mm, oder eine Stärke von 1,5-2,0 mm, auf.

Im Rahmen der Erfindung sind offensichtlich auch Behälter 1 mit anderen als rechteckigen Grundrissen, z.B. kreisförmigen Grundrissen. Die Abstandshalter 3 können aus Pfosten gebildet sein, die z. B. in den Ecken des Bodens 2 angeordnet und schräg nach außen geneigt sind.

### Verwendung der Schaumfolie in den Behältern 1

Schaumfolie wird eben auf den Boden 2 des Behälters 1 gelegt und vorzugsweise am Boden 2 und/oder den Abstandshaltern 3 lösbar befestigt. Teiglinge werden im Herstellungs- und Auslieferungsbetrieb unmittelbar auf die auf dem Boden 2 aufliegende Schaumfolie aufgesetzt (nicht dargestellt). Die Adhäsion zwischen der den Teiglingen zugewandten glatten Oberfläche der Schaumfolie und den Teiglingen reicht aus, um die Teiglinge am zugewiesenen Ort auf der Schaumfolie zu halten.

Die Behälter 1 mit den Teiglingen können für den Transport mit Hife der an den Abstandshaltern 3 angebrachten Griffen gestapelt werden. Luft kann seitlich zwischen den Abstandshaltern 3 zwischen die Behälter 1 geblasen werden und dringt durch die Löcher 4 im Boden 2 bis zu den Kontaktstellen zwischen Schaumfolie und Boden 2 vor. Die eingeblasene Luft dient zur Trocknung von Schwitz- Kondenswasser, das während Lagerung und Transport aus den gekühlten Teiglingen resultieren kann. Schimmelbildung an den Kontaktstellen zwischen Schaumfolie und Boden 2 kann durch die Trocknung vorgebeugt werden.

Die Teiglinge können beim Entladen im verarbeitenden Bäckereibetrieb von den Schaumfolien abgenommen oder durch Drehen der Behälter 1 um 180° aus den Behältern 1 gestürzt werden. Die Teiglinge lösen sich von der glatten Oberfläche der Schaumfolie, ohne irgendwelche Rückstände an oder in der Schaumfolie zurück zu lassen. Die Schaumfolien brauchen nicht oder nur alle zwei bis drei Monate gereinigt zu werden.

## Patentansprüche

1. Transportvorrichtung für Teiglinge mit einem Behälter (1), der einen im wesentlichen ebenen Boden (2) mit Abstandshaltern (3) am äußeren Umfang aufweist und einer Schaumfolie mit glatter Oberfläche, die im wesentlichen auf dem gesamten Boden (2) aufliegt.

2. Transportvorrichtung für Teiglinge gemäß Anspruch 1, dadurch gekennzeichnet, daß der Behälter (1) im wesentlichen rechteckig ist.

3. Transportvorrichtung für Teiglinge gemäß Anspruch 1, dadurch gekennzeichnet, daß die Abstandshalter (3) im wesentlichen senkrecht zum Boden (2) des Behälters (1) sind.

4. Transportvorrichtung für Teiglinge gemäß Anspruch 1, dadurch gekennzeichnet, daß die Abstandshalter (3) aus rechteckigen, ebenen Flächen gebildet, sind, die am Boden (2) des Behälters (1) angeordnet sind.

5. Transportvorrichtung für Teiglinge gemäß Anspruch 1, dadurch gekennzeichnet, daß die Abstandshalter (3) mit Griffen versehen sind.

6. Transportvorrichtung für Teiglinge gemäß Anspruch 1, dadurch gekennzeichnet, daß der Boden (2) senkrecht zu seiner Ebene mit Löchern (4) versehen ist.

7. Transportvorrichtung für Teiglinge gemäß Anspruch 1, dadurch gekennzeichnet, daß der Boden (2) lösbar mit den Abstandshaltern (3) verbunden ist.

8. Transportvorrichtung für Teiglinge gemäß Anspruch 1, dadurch gekennzeichnet, daß die Schaumfolie aus Polyäthylen, insbesondere Cell-aire Polyäthylen, gebildet ist.

9. Transportvorrichtung für Teiglinge gemäß Anspruch 1, dadurch gekennzeichnet, daß die Schaumfolie mit dem Boden (2) und/oder den Abstandshaltern (3) lösbar verbunden ist.

10. Transportvorrichtung für Teiglinge gemäß Anspruch 1, dadurch gekennzeichnet, daß die Schaumfolie eine Stärke von 0,5-3,0 mm, insbesondere eine Stärke von 1,5-2,0 mm, aufweist.
